# EUROPÄISCHE PATENTSCHRIFT

(11) **EP 0 715 446 B1**
(45) Veröffentlichungstag und Bekanntmachung des Hinweises auf die Patenterteilung: **14.05.2003**
(21) Anmeldenummer: 95114935.0
(22) Anmeldetag: 22.09.1995
(51) Int. Cl.: H04M 3/60, H04M 3/50, H04M 3/54

(54) **Verfahren für eine Fernmelde-, insbesondere Fernsprechvermittlungsanlage, mit Nachtstellen**
Method for a telecommunication exchange, especially a telephone exchange, with night positions
Méthode pour un central de télécommunication, en particulier un central téléphonique, avec positions de nuit

(30) Priorität: 03.12.1994 DE 4443119
(43) Veröffentlichungstag der Anmeldung: 05.06.1996
(73) Patentinhaber: Tenovis GmbH & Co. KG, 60362 Frankfurt am Main (DE)
(72) Erfinder: Müller, Wolf, D-63322 Rödermark (DE); Sommerschuh, Stefan, D-60528 Frankfurt (DE)
(74) Vertreter: Meissner, Bolte & Partner

(56) Entgegenhaltungen:
- DE-A- 3 024 787
- DE-A- 3 932 689

## Beschreibung

Die Erfindung betrifft ein Verfahren für eine Fernmelde-, insbesondere Fernsprechvermittlungsanlage, mit einem oder mehreren Vermittlungsplätzen, wobei während der Außerbetriebnahme sämtliche Vermittlungsplätze ein oder mehrere Teilnehmeranschlüsse als sogenannte "Nachtstellen" geschaltet werden, welche die, für die Vermittlungsplätze bestimmten Anrufe entgegennehmen und die Nachtstellen für die Durchführung von Vermittlungsvorgängen während dieses Zeitraumes mit besonderen Leistungsmerkmalen ausgestattet werden.

Ein derartiges Verfahren ist bereits bekannt. So wird in der DE-OS 35 27 508 ein Verfahren für eine Fernmeldeanlage, insbesondere für eine Fernsprechnebenstellenanlage mit mindestens einer Abfragestelle beschrieben, bei welchem die Nachtnebenstellen für die Erfüllung der vermittlungstechnischen Aufgaben mit besonderen Berechtigungen, wie beispielsweise Fernwahlberechtigung, Aufschalteberechtigung, usw. versehen werden.

Ein derartiges Verfahren ist auch aus den Offenlegungsschriften DE-OS 39 32 689 und DE-OS 30 24 787 bekannt. Die Aufgabe der Erfindung besteht nun darin, das Verfahren der eingangs genannten Art dahingehend weiterzubilden, daß immer sichergestellt ist, daß in jedem Fall sämtliche Anrufe mit Sicherheit bearbeitet werden, die auf eine derartige Nachtstelle umgeleitet werden.

Diese Aufgabe wird dadurch gelöst, daß im Besetztfall der Nachtstelle oder bei unbesetzter Nachtstelle beziehungsweise bei nicht-meldender Nachtstelle innerhalb einer vorgegebenen Zeit ein Anruf zu einem vorbestimmten Teilnehmeranschluß um- beziehungsweise weitergeleitet wird, wobei dieser für die Dauer der Verbindung besondere Leistungsmerkmale erhält.

Auf diese weise wird sichergestellt, daß auch im Besetztfall der Nachtstelle oder bei unbesetzter Nachtstelle beziehungsweise bei Nichtmelden der Nachtstelle innerhalb einer vorgesehenen Zeit für die Nachtstelle bestimmte Anrufe an einen vorbestimmten Teilnehmeranschluß um- beziehungsweise weitergeleitet werden. Damit der vorbestimmte Teilnehmeranschluß dann auch den Anruf wie ein Vermittlungsplatz oder eine Nachtstelle behandeln kann, wird der vorbestimmte Teilnehmeranschluß nur für die Dauer der betreffenden Verbindung mit entsprechenden Leistungsmerkmalen ausgestattet.

Vorteilhafte Weiterbildungen der Erfindung ergeben sich aus den Unteransprüchen.

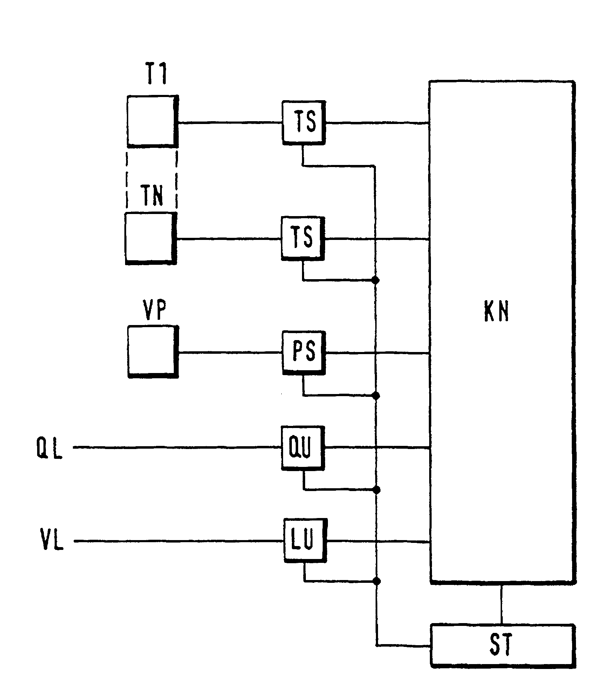

Die Erfindung wird anhand eines Ausführungsbeispiels näher erläutert, welches in der Zeichnung dargestellt ist.

Bei dem in der Zeichnung dargestellten Blockschaltbild handelt es sich um eine digitale Fernsprechnebenstellenanlage, die Erfindung ist jedoch auch auf analoge Fernsprechnebenstellenanlagen anwendbar.

Die Fernsprechnebenstellenanlage weist ein Koppelnetz KN auf, welches die Anschlüsse im Rahmen einer Verbindung zwischen zwei Anschlüssen auf Veranlassung der Steuereinrichtung ST miteinander verbindet. An der Fernsprechnebenstellenanlage sind ein oder mehrere Vermittlungsplätze VP, eine Vielzahl von Fernsprechapparaten T1 bis TN, eine oder mehrere Verbindungsleitungen VL zum Anschluß an eine öffentliche Vermittlungsstelle und ein oder mehrere Querverbindungsleitungen QL zum Anschluß an eine oder mehrere weitere nichtgezeigte Fernsprechnebenstellenanlagen angeschlossen. Als Schnittstelle zum Anschluß der Fernsprechapparate T1 bis TN dienen Teilnehmeranschlußschaltungen TS, zum Anschluß eines Vermittlungsplatzes VP ist jeweils eine Platzsteuerung PS vorhanden, eine Verbindungsleitung VL ist jeweils an einer Leitungsübertragung LU und eine Querverbindungsleitung QL ist jeweils mit einer Querleitungsübertragung QU angeschlossen. Jede der Teilnehmeranschlußschaltungen TS ist mit einem oder auch zwei Eingängen des Koppelnetzes KN verbunden. Die Platzsteuerung PS ist mit mindestens an zwei Eingängen des Koppelnetzwerks KN verbunden, während die Verbindungsleitungsübertragung LU und die Querverbindungsleitungsübertragung QU jeweils mit einem Eingang des Koppelnetzes KN verbunden ist. Werden jedoch auf der Verbindungsleitung VL oder auch auf der Querverbindungsleitung QL zwei oder mehr Nutzkanäle übertragen, so sind je nach Aufbau des Koppelnetzes KN auch mehrere Eingänge des Koppelnetzwerks KN mit der jeweiligen Leitungsübertragung verbunden. Das gesagte gilt ebenso für die Teilnehmeranschlußschaltung TS.

Die in der Teilnehmeranschlußleitung TS beziehungsweise in der Platzsteuerung PS ankommenden, beziehungsweise von der öffentlichen Vermittlungsstelle beziehungsweise von der anderen nichtgezeigten Fernsprechnebenstellenanlage übertragenen Signalisierungsinformationen werden in der betreffenden Anschlußschaltung (TS, PS, LU, QU) aus dem seriellen Datenstrom abgezweigt und über eine gemeinsame Busleitung der Steuereinrichtung ST übermittelt. Ebenso werden auf dem umgekehrten Weg Signalisierungsinformationen von der Steuereinrichtung ST zu den einzelnen Anschlußschaltungen übertragen zwecks Aussendung an die daran angeschlossene Einrichtung.

Die Funktionsabläufe innerhalb der Fernsprechnebenstellenanlage während eines Verbindungsaufbaus werden kurz erläutert. Es wird davon ausgegangen, daß von der öffentlichen Vermittlungsstelle über die Verbindungsleitung VL ein Verbindungswunsch an die Fernsprechnebenstellenanlage übermittelt wird. Es wird dabei davon ausgegangen, daß nicht die Rufnummer des gewünschten Teilnehmers der Fernsprechnebenstellenanlage übertragen wird, sondern diejenige, welche die Verbindung mit einem Vermittlungsplatz zur Folge hat. Aufgrund der von der Leitungsübertragung LU übermittelten Information wird in der Steuereinrichtung ST erkannt, daß die betreffende Verbindungsleitung VL mit einem Vermittlungsplatz VP verbunden werden soll. Ist der Vermittlungsplatz frei, so veranlaßt die Steuereinrichtung ST im Koppelnetzwerk die Herstellung einer Verbindung zwischen der Leitungsübertragung LU und der Platzsteuerung PS. Der Vermittlungsplatz VP ist nun mit der Verbindungsleitung VL verbunden. Der ferne Teilnehmer teilt der Bedienungsperson des Vermittlungsplatzes VP beispielsweise den Namen des gewünschten Teilnehmers mit, mit welchem ein Verbindungswunsch besteht (beispielsweise Fernsprechapparat T1). Durch Eingabe der Rufnummer des Fernsprechapparats T1, welche von der Platzsteuerung PS an die Steuereinrichtung ST übermittelt wird, veranlaßt die Steuereinrichtung ST die Auftrennung der Verbindung zwischen der Leitungsübertragung LU und der Platzsteuerung PS und stellt stattdessen eine Verbindung zwischen der Leitungsübertragung LU und der Teilnehmeranschlußschaltung TS des Fernsprechapparates T1 her.

Bei einer Verbindung von einer nichtgezeigten entfernten Fernsprechnebenstellenanlage, die über eine Querverbindungsleitung QL an der Fernsprechnebenstellenanlage angeschlossen ist, können die Vorgänge in der bereits beschriebenen Weise ebenso ablaufen wie bei einem Anruf auf einer Verbindungsleitung VL, es ist jedoch auch denkbar, daß in beiden Fällen durch Übermittlung der Rufnummer des gewünschten Teilnehmers die Steuereinrichtung ST zu veranlassen, ohne Zwischenschaltung eines Vermittlungsplatzes VP direkt über das Koppelnetzwerk KN eine Verbindung zu dem gewünschten Teilnehmeranschluß durchzuschalten. Die Verbindung zwischen zwei Fernsprechapparaten läuft ebenfalls in der beschriebenen Weise ab.

Es wird nun davon ausgegangen, daß der Vermittlungsplatz VP außerhalb der normalen Arbeitszeit nicht besetzt ist und stattdessen ein Fernsprechapparat, beispielsweise der Fernsprechapparat TN als sogenannte "Nachtstelle" geschaltet ist. Die Vorgänge laufen in der bereits beschriebenen Weise ab, lediglich mit dem Unterschied, daß die Anrufe nicht mehr von dem Vermittlungsplatz VP, sondern von der Nachtstelle TN bearbeitet werden. Diese ist für die Zeit ihrer Funktion als Nachtstelle mit den notwendigen Leistungsmerkmalen versehen, welche zur Abwicklung von Vermittlungsvorgängen dort benötigt werden. Der Fernsprechapparat TN kann als Nachtstelle beispielsweise durch den Vermittlungsplatz VP, durch ein Zeitschaltwerk, oder durch eine andere Art der Fernsteuerung als Nachtstelle geschaltet werden.

Jeder Anschluß am Koppelnetzwerk KN ist beispielsweise unter der Adresse des betreffenden Eingangs des Koppelnetzwerks KN in einem nichtgezeigten Speicher der Steuereinrichtung ST mit bestimmten Leistungsmerkmalen versehen. In diesem Speicher werden nun während der Dauer der Funktion als Nachtstelle des Fernsprechapparats TN der betreffende Anschluß mit denjenigen Leistungsmerkmalen versehen, welche für die Durchführung von Vermittlungsvorgängen unbedingt notwendig sind. Diese Leistungsmerkmale können beispielsweise aus einem bestimmten Speicherbereich des nichtgezeigten Speichers der Steuereinrichtung ST in den betreffenden Speicherplatz des Teilnehmeranschlusses des Fernsprechapparates TN übertragen werden, nachdem die ursprünglichen Leistungsmerkmale aus dem Speicher ausgelesen und für die Dauer der Funktion als Nachtstelle an geeigneter Stelle zwischengespeichert werden, damit diese nach Beendigung der Funktion als Nachtstelle wieder zurückübertragen werden können. Es ist auch denkbar, durch eine besondere Kennzeichnung des betreffenden Speicherplatzes des Teilnehmeranschlusses die Leistungsmerkmale in einem anderen Speicherbereich für die Dauer der Funktion als Nachtstelle wirksam werden zu lassen.

Ist nun der Teilnehmeranschluß des Fernsprechapparates TN als Nachtstelle geschaltet und ist diese besetzt oder durch keine Bedienungsperson besetzt beziehungsweise meldet sich dieser nicht innerhalb einer vorgegebenen Zeit bei einem umgeleiteten Anruf, so wird dieser Anruf an einen vorbestimmten Teilnehmeranschluß, beispielsweise den Fernsprechapparates T1 weitergeleitet. Damit dieser Fernsprechapparat T1 nun die Funktion einer Nachtstelle übernehmen kann, wird dem betreffenden Teilnehmeranschluß für die Dauer der Verbindung mit denjenigen Leistungsmerkmalen versehen, welche für die Durchführung von Vermittlungsvorgängen unbedingt notwendig sind. Die Behandlung der Leistungsmerkmale erfolgt dabei in der bereits beschriebenen Weise, jedoch mit dem Unterschied, daß bei der Nachtstelle während einer vorgegebenen Zeit die besonderen Leistungsmerkmale fest zugeordnet sind, während bei dem Anschluß des Fernsprechapparats T1 die Zuordnung der besonderen Leistungsmerkmale nur für die Dauer des jeweiligen Anrufs erfolgt, wenn dieser ursprünglich für die Nachtstelle bestimmt war. Bei allen anderen Anrufen zu dem Anschluß des Fernsprechapparates T1 bleibt es bei den normalen Leistungsmerkmalen.

Der betreffende Teilnehmeranschluß des Fernsprechapparates T1 ist selbstverständlich in der Steuereinrichtung ST entsprechend gekennzeichnet, damit dieser die für die Nachtstelle TN bestimmten Anrufe entgegennehmen kann, wenn die Nachtstelle nicht besetzt ist oder die Bedienungsperson der Nachtstelle abwesend ist oder sich die Nachtstelle nicht meldet. Bei unbesetzter Nachtstelle TN kann die Nachtstelle selbst durch Eingabe einer bestimmten Information der Steuereinrichtung ST mitteilen, daß diese nicht in Betrieb ist, so daß sämtliche für diese bestimmten Anrufe an den Teilnehmeranschluß des Fernsprechapparates T1 umgeleitet werden.

Wird nun aus einem der genannten Gründe dem Teilnehmeranschluß des Fernsprechapparates T1 ein Anruf zugeteilt, so wird in der Steuereinrichtung ST zunächst geprüft, ob der betreffende Teilnehmeranschluß nicht bereits als Nachtstelle geschaltet ist, das heißt, daß diesem Anschluß bereits die besonderen Leistungsmerkmale zugeteilt sind. Dies kann beispielsweise dann der Fall sein, wenn mehrere Teilnehmeranschlüsse als Sammelanschluß geschaltet sind, wobei nur einige Teilnehmeranschlüsse als Nachtstellen geschaltet sind beziehungsweise die Funktion einer Nachtstelle für bestimmte Anrufe übernehmen können.

Es ist nun nicht unbedingt erforderlich, daß Anrufe, die eigentlich für eine Nachtstelle bestimmt sind und aus den genannten Gründen von dieser nicht abgewickelt werden, in der bereits beschriebenen Weise an einen Fernsprechanschluß der betreffenden Fernsprechnebenstellenanlage weitergeleitet werden, vielmehr kann es sich bei diesem Teilnehmeranschluß auch um einen solchen handeln, welcher sich in einer anderen, nicht gezeigten Fernsprechnebenstellenanlage befindet, welche über eine Querverbindungsleitung QL mit der in der Zeichnung gezeigten Fernsprechnebenstellenanlage verbunden ist. In einem solchen Fall muß jeder Anruf, der zu der anderen Fernsprechnebenstellenanlage umgeleitet wird, mit der Übermittlung entsprechender Steuerinformationen begleitet werden, damit in der anderen Fernsprechnebenstellenanlage die beschriebenen Vorgänge hinsichtlich der Zuteilung der Leistungsmerkmale für die Durchführung der Funktion einer Nachtstelle dort durchgeführt werden können. Die Steuereinrichtung ST erzeugt in diesem Fall die entsprechenden Steuerinformationen, welche über die Querleitungsübertragung QU auf die Querverbindungsleitung QL übertragen werden und dort von der Steuereinrichtung ST der entfernten Nebenstellenanlage ausgewertet werden und die Durchführung der beschriebenen Vorgänge hinsichtlich der Zuteilung der Leistungsmerkmale in der entfernten Fernsprechnebenstellenanlage zur Folge haben.

## Patentansprüche

1. Verfahren für eine Fernmelde-, insbesondere Fernsprechvermittlungsanlage, mit einem oder mehreren Vermittlungsplätzen (VP), wobei während der Außerbetriebnahme sämtlicher Vermittlungsplätze ein oder mehrere Teilnehmeranschlüsse (T1...TN) als sogenannte Nachtstellen geschaltet werden, welche die für die Vermittlungsplätze bestimmten Anrufe entgegennehmen und für die Durchführung von Vermittlungsvorgängen während dieses Zeitraumes mit besonderen Leistungsmerkmalen, wie zum Beispiel Fernwahlberechtigung und Aufschalteberechtigung, ausgestattet werden, **dadurch gekennzeichnet, daß** im Besetztfall einer Nachtstelle (TN) oder bei unbesetzter Nachtstelle beziehungsweise bei nicht-meldender Nachtstelle innerhalb einer vorgegebenen Zeit ein Anruf zu einem vorbestimmten Teilnehmeranschluß (T1) um- beziehungsweise weitergeleitet wird, wobei dieser für die Dauer der Verbindung besondere Leistungsmerkmale erhält.

2. Verfahren nach Anspruch 1, **dadurch gekennzeichnet, daß** dem Teilnehmeranschluß die gleichen Leistungsmerkmale wie der Nachtstelle zugeteilt werden.

3. Verfahren nach einem der Ansprüche 1 oder 2, **dadurch gekennzeichnet, daß** bei einer aufzubauenden Verbindung zu einem vorgegebenen Teilnehmeranschluß zunächst geprüft wird, ob dieser bereits mit den Leistungsmerkmalen ausgestattet ist.

4. Verfahren nach einem der Ansprüche 1 bis 3, **dadurch gekennzeichnet, daß** die Nachtstelle und der oder die vorgegebenen Teilnehmeranschlüsse unter einem gemeinsamen Sammelanschluß erreichbar sind.

5. Verfahren für einen Netzverbund, bestehend aus mehreren Fernsprechvermittlungsanlagen, nach einem der Ansprüche 1 bis 4, **dadurch gekennzeichnet, daß** die Zuteilung der Leistungsmerkmale auch dann erfolgt, wenn die Nachtstelle an einer ersten Fernsprechvermittlungsanlage und der vorgegebene Teilnehmeranschluß an einer zweiten Fernsprechvermittlungsanlage angeschlossen ist.

## Claims

1. A method intended for a telecommunication facility, in particular for a trunk exchange (V) having one or several operator desks (VP), with one or several subscriber lines (T1...TN), during off-service periods of all of the operators desks, being changed into so-called night posts which take the calls destined for the operator desks, and which during said period are assigned special performance features (1), such as, for example, non-restricted trunk dialing and override authorization, for carrying out exchange operations, **characterized in that**, if a night post (TN) is busy, or if a night post is unstaffed or not answering, a call is redirected or relayed to a predetermined subscriber line (T1) within a predefined time, with the latter being assigned special performance features for the duration of the call.

2. The method according to claim 1, **characterized in that** said subscriber line is assigned the same performance features as the night post.

3. The method according to any one of claims 1 or 2, **characterized in that** when a call is to be set up to a predetermined subscriber line, it is first checked whether said performance features have already been assigned to said subscriber.

4. The method according to any one of claims 1 through 3, **characterized in that** said night post or said predetermined subscriber line/s are available under a common pilot directory number.

5. A method for an internetwork system comprised of several trunk exchanges according to any one of claims 1 through 4, **characterized in that** the assignment of said performance features even takes place when the night post is connected to a first trunk exchange, and the predetermined subscriber line is connected to a second trunk exchange.

## Revendications

1. Procédé pour un central de télécommunication, en particulier un central de commutation, comportant un ou plusieurs postes de commutation (VP), un ou plusieurs raccordements de correspondant (T1... TN) étant connectés en tant que postes de nuit pendant la mise hors service de chacun des postes de commutation, qui reçoivent les appels destinés aux postes de commutation et auxquels sont attribués des caractéristiques de fonctionnement particulières pour réaliser des processus de commutation pendant cette durée, telles par exemple l'autorisation de communications longue distance ou l'autorisation d'intercalation, **caractérisé en ce qu'**en cas d'occupation d'un poste de nuit (TN) ou de non-occupation d'un poste de nuit, ou en cas de non-réponse d'un poste de nuit dans un laps de temps prédéfini, un appel est détourné ou réacheminé vers un raccordement de correspondant (T1) prédéfini, celui-ci se voyant attribuer des caractéristiques de fonctionnement particulières pendant la durée de la liaison.

2. Procédé selon la revendication 1, **caractérisé en ce que** ce raccordement de correspondant se voit attribuer les mêmes caractéristiques de fonctionnement que celles du poste de nuit.

3. Procédé selon l'une des revendications 1 ou 2, **caractérisé en ce que** lors d'une connexion à établir avec un raccordement de correspondant prédéfini, il est d'abord vérifié si celui-ci possède déjà les caractéristiques de fonctionnement.

4. Procédé selon l'une des revendications 1 à 3, **caractérisé en ce que** le poste de nuit et le ou les raccordement/s prédéfini/s de correspondant peut/peuvent être atteint/s par un raccordement commun de regroupage.

5. Procédé pour une réunion de réseaux se composant de plusieurs centraux de commutation selon l'une des revendications 1 à 4, **caractérisé en ce que** l'affectation des caractéristiques de fonctionnement s'effectue également lorsque le poste de nuit est raccordé à un premier central de commutation et que le raccordement de correspondant prédéfini est raccordé à un deuxième central de commutation.
